(19) Europäisches Patentamt
European Patent Office
Office européen des brevets

(11) EP 2 507 797 B1

(12) **FASCICULE DE BREVET EUROPEEN**

(45) Date de publication et mention de la délivrance du brevet:
**07.01.2015 Bulletin 2015/02**

(21) Numéro de dépôt: **10792875.6**

(22) Date de dépôt: **30.11.2010**

(51) Int Cl.:
***G21C 17/00*** *(2006.01)* ***G21C 17/10*** *(2006.01)*
***G21C 9/02*** *(2006.01)* *G21C 7/08* *(2006.01)*
*G21C 17/108* *(2006.01)*

(86) Numéro de dépôt international:
**PCT/EP2010/068572**

(87) Numéro de publication internationale:
**WO 2011/064400 (03.06.2011 Gazette 2011/22)**

# (54) PROCEDE ET DISPOSITIF DE DETECTION DE CHUTE DE GRAPPE D'UN REACTEUR NUCLEAIRE

VERFAHREN UND VORRICHTUNG ZUR ERKENNUNG DES ABFALLENS EINES CLUSTERS IN EINEM KERNREAKTOR

METHOD AND DEVICE FOR DETECTING THE DROP OF A CLUSTER IN A NUCLEAR REACTOR

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **30.11.2009 FR 0958493**

(43) Date de publication de la demande:
**10.10.2012 Bulletin 2012/41**

(73) Titulaire: **Areva NP**
**92400 Courbevoie (FR)**

(72) Inventeur: **ROYERE, Christian**
**F-92140 Clamart (FR)**

(74) Mandataire: **Lebkiri, Alexandre**
**Cabinet Camus Lebkiri**
**87 Rue Taitbout**
**75009 Paris (FR)**

(56) Documents cités:
**US-A- 4 842 805**
**US-A- 4 983 350**
**US-A- 6 118 837**
**US-A1- 2009 252 272**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 2 507 797 B1

## Description

La présente invention concerne un procédé et un dispositif associé de détection de chute de grappe dans un réacteur nucléaire.

L'invention concerne plus particulièrement les réacteurs nucléaires à eau pressurisée (REP).

La réaction nucléaire qui a lieu dans le coeur du réacteur est accompagnée par l'émission d'un flux neutronique distribué dans le coeur, notamment selon l'axe des assemblages combustibles. Le coeur comporte des évidements verticaux dans lesquels des barres de contrôles comportant des éléments neutrophages sont pilotées afin de descendre verticalement dans ces évidements pour absorber le flux neutronique et ainsi contrôler la réactivité du coeur du réacteur.

De façon classique, chaque barre de contrôle comporte une pluralité de crayons de contrôle en matériau absorbant les neutrons.

Les barres de contrôle sont maintenues au dessus du coeur et peuvent être positionnées à différentes positions d'insertion entre une position haute et une position basse par des mécanismes d'insertion.

Ainsi, le déplacement vertical de chaque barre permet de réguler la réactivité du coeur du réacteur, autorisant ainsi des variations de la puissance globale fournie par le coeur depuis la puissance nulle jusqu'à la puissance nominale (notée par la suite PN) ; la position des barres de contrôle, c'est-à-dire de l'état d'enfoncement des barres de contrôle dans les assemblages combustibles, est donc fonction de la puissance du coeur.

Une chute accidentelle d'une ou de plusieurs grappes de contrôle dans un évidement a pour conséquence principale d'absorber localement le flux neutronique et de perturber la distribution du flux neutronique dans le coeur. Cette perturbation peut être très importante et risque de provoquer une crise d'ébullition de l'eau conduisant à l'endommagement des crayons combustibles du coeur, si cette chute de grappe intervient lorsque le réacteur fonctionne à un niveau de puissance élevé et si aucune action de correction n'est menée, compte tenu que sous l'effet de l'autorégulation de température et des contres réactions, la puissance va remonter à sa valeur initiale.

Une telle action de correction consiste par exemple, à l'insertion des barres de contrôle dans le coeur afin de limiter et/ou de stopper la réactivité du coeur.

C'est pourquoi, les réacteurs nucléaires à eau pressurisée comportent des dispositifs de détection de chute de grappe formés de façon connue par une pluralité de chaines de détection séparées et indépendantes.

Chacune de ces chaînes est agencée de façon à fournir un signal de chute correspondant à la détection d'une chute de grappe et comporte au moins :

- une sonde de mesure du flux neutronique apte à la mesure du flux neutronique qui connaît, en cas d'une chute de grappe, une diminution d'autant plus grande que l'évidement, où a lieu la chute, est proche de la sonde ;
- des moyens de traitement primaire associés à la sonde aptes à fournir un signal primaire de chute seulement lorsque le flux neutronique mesuré par ladite sonde connaît une diminution présentant une vitesse de décroissance dépassant un seuil de vitesse déterminé.

Le dispositif de détection comporte en outre des moyens de traitement secondaire recevant les signaux de chute en sortie des chaînes de détection et fournissant un signal secondaire de chute de grappe seulement lorsqu'ils reçoivent au moins deux signaux primaires de chute de grappe provenant des moyens de traitement primaire de façon à réduire le risque d'engagement d'un action corrective en absence d'un réelle chute de grappe dans le coeur.

Il est connu que les procédés de détection émettent un signal de chute lorsqu'ils détectent une vitesse de décroissance rapide du flux neutronique dépassant, en valeur absolue, une valeur seuil égale typiquement à 6% du flux nominal par seconde (pour un réacteur d'une puissance de 1300 MWe) ; cette vitesse correspond à la dérivée du flux neutronique par rapport au temps. Ce dépassement de seuil intervient dans les premiers instants de l'incident lorsque la puissance nucléaire baisse transitoirement pendant la chute de grappe.

Cependant, ce type de procédé n'est pas assez sensible et ne permet pas de détecter suffisamment de chutes de grappes, notamment pour des chutes conduisant à un accident de « catégorie 2 » en absence de détection de la chute de grappe.

Les situations accidentelles dites de catégorie 2 engendrent des transitoires de puissance sévères entrainant une augmentation rapide de la puissance et/ou une déformation de la distribution de puissance risquant de détériorer la gaine du combustible par crise d'ébullition ou par surpuissance linéique.

Il a été développé ensuite des procédés de détection émettant un signal lorsque la valeur absolue de la vitesse de décroissance du flux neutronique dépasse un seuil de vitesse égal à 3%, voire 2%, du flux neutronique par seconde permettant ainsi de détecter davantage de chute de grappe.

Cependant, ce seuil de vitesse de progression peut être atteint lors des transitoires normaux d'exploitation les plus sévères, comme par exemple l'îlotage caractérisé par la déconnexion brutale du réacteur du réseau normal d'évacuation d'énergie ; ce faible seuil de variation négative du flux réduit les marges du fonctionnement du réacteur et occasionne des actions correctives intempestives et non désirées telles que des arrêts automatiques du réacteur.

Des exemples de procédé de détection de chute de grappe d'un réacteur nucléaire sont notamment décrits dans les documents US 4842805, US 6118837,

et US 2009/0252272.

Dans ce contexte, l'invention a pour objet un procédé visant à résoudre les problèmes mentionnés ci-dessus et à améliorer les performances d'un réacteur nucléaire à eau pressurisée par la réduction des risques de non détection d'une chute de grappe par le dispositif de détection tout en garantissant un fonctionnement optimum du réacteur nucléaire lors des transitoires normaux d'exploitation.

A cette fin, l'invention propose un procédé de détection de chute de grappe(s) d'un réacteur nucléaire à eau pressurisée, ledit procédé comportant les étapes consistant à :

- détecter une dérivée temporelle négative du flux neutronique, et comparer la valeur absolue de ladite dérivée temporelle à une première valeur seuil ;
- déclencher une temporisation si ladite valeur absolue est supérieure à ladite valeur seuil ;
- détecter une dérivée temporelle positive dudit flux neutronique, et comparer la valeur absolue de ladite dérivée temporelle à une deuxième valeur seuil ;
- déclencher l'arrêt d'urgence du réacteur si la valeur absolue de ladite dérivée temporelle positive dudit flux devient supérieure à ladite deuxième valeur seuil durant ladite temporisation.

On entend par dérivée temporelle $\frac{\partial \phi}{\partial t}$ du flux neutronique $\Phi$, une variation du flux neutronique rapportée sur une période de temps donnée.

Grâce à l'invention, il est possible de détecter davantage de chutes de grappes, non détectées par les dispositifs et les procédés de détection de l'art antérieur, tout en garantissant un fonctionnement normal du réacteur nucléaire lors des transitoires normaux d'exploitation les plus sévères, du type îlotage.

L'îlotage est caractérisé par la déconnexion brutale du réacteur du réseau normal d'évacuation d'énergie. La déconnexion s'effectue par l'ouverture d'un disjoncteur de ligne, le coeur continuant d'alimenter ses propres auxiliaires. Les répercussions de ce transitoire sur le réacteur sont une diminution rapide de la puissance fournie par le coeur à une valeur proche de 30% de la puissance nominale.

Le procédé selon l'invention utilise avantageusement la détection de chute de grappe par variation positive du flux neutronique.

Lors du dépassement d'un premier seuil lors d'une variation négative du flux neutronique, ledit premier seuil correspondant, en valeur absolue, à une vitesse de progression typiquement égale ou inférieure à 5% du flux neutronique par seconde, le procédé déclenche une temporisation durant laquelle un arrêt d'urgence, ou une autre action corrective, est déclenché si la variation positive du flux neutronique est supérieure à la valeur d'un deuxième seuil positif.

Le procédé de détection de chute de grappe d'un réacteur nucléaire à eau pressurisée selon l'invention peut également présenter une ou plusieurs des caractéristiques ci-dessous, considérées individuellement ou selon toutes les combinaisons techniquement possibles :

- le procédé comporte une étape de détermination d'une dérivée moyenne du flux neutronique sur un intervalle de temps si ladite valeur absolue de ladite dérivée temporelle positive dudit flux neutronique reste comprise entre ladite deuxième valeur seuil et une troisième valeur seuil lors de ladite temporisation ;
- ledit arrêt d'urgence est déclenché si ladite valeur absolue moyenne de ladite dérivée temporelle moyenne dudit flux est supérieure à ladite troisième valeur seuil durant ladite temporisation ;
- ladite première valeur seuil correspond à une variation égale ou inférieure à 5% du flux nominal par seconde ;
- ladite deuxième valeur seuil correspond à une variation comprise entre 2% et 4% du flux nominal par seconde ;
- ladite troisième valeur seuil correspond à une variation inférieure à 1 % du flux nominal par seconde ;
- ladite temporisation correspond à une durée inférieure à une minute ;
- ledit intervalle de temps de détermination de ladite dérivée moyenne correspond à une durée inférieure à ladite durée de ladite temporisation ;
- ledit intervalle de temps est sensiblement égal à 10 secondes.

L'invention a également pour objet un dispositif de détection de chute de grappe, pour la mise en oeuvre du procédé selon l'invention, comportant :

- une sonde de mesure du flux neutronique apte à la mesure d'un flux neutronique ;
- des moyens de traitement primaire associés à la sonde comportant :
  - des moyens pour détecter une dérivée temporelle négative du flux neutronique, et comparer la valeur absolue de ladite dérivée temporelle à une première valeur seuil ;
  - des moyens pour déclencher une temporisation si ladite valeur absolue est supérieure à ladite valeur seuil ;
  - des moyens pour détecter une dérivée temporelle positive dudit flux neutronique, et comparer la valeur absolue de ladite dérivée temporelle à une deuxième valeur seuil ;
  - des moyens pour déclencher l'arrêt d'urgence du réacteur si la valeur absolue de ladite dérivée temporelle positive dudit flux devient supérieure à ladite deuxième valeur seuil durant ladite temporisation.

D'une façon générale, on entendra par le terme sensiblement égal, une valeur comprise dans un intervalle de ±10%.

D'autres caractéristiques et avantages de l'invention ressortiront plus clairement de la description qui en est donnée ci-dessous, à titre indicatif et nullement limitatif, en référence aux figures annexées, parmi lesquelles :

- la figure 1A illustre schématiquement une évolution de puissance en fonction du temps représentative d'un transitoire de puissance résultant d'une chute de grappe dans le coeur d'un réacteur nucléaire à eau pressurisée ;
- la figure 1B illustre schématiquement une évolution de puissance en fonction du temps, représentative d'un transitoire normal d'exploitation ;
- la figure 2 illustre les différentes étapes du procédé de détection selon l'invention.

La figure 1A illustre schématiquement une évolution de puissance P du réacteur en fonction du temps représentative d'un transitoire de puissance résultant d'une chute de grappe dans le coeur du réacteur nucléaire.

La figure 1B illustre schématiquement une évolution de puissance P du réacteur en fonction du temps représentative d'un transitoire normal d'exploitation.

Lors du fonctionnement normal d'un réacteur à eau pressurisée, c'est-à-dire dans les situations dites de catégorie 1, des transitoires de puissance, c'est-à-dire des variations de puissance, peuvent se produire ; des variations de puissance peuvent être ainsi nécessaires, notamment pour s'adapter aux besoins en énergie électrique du réseau, on parlera alors de transitoire normal d'exploitation.

Il peut être en effet utile, notamment dans des pays comme la France où 80% de l'électricité est produite par des réacteurs nucléaires, que la puissance globale fournie par les réacteurs varie afin de s'adapter aux besoins du réseau électrique qu'ils alimentent en fonction de la demande. En particulier, il est souhaitable de pouvoir faire fonctionner les réacteurs à puissance réduite pendant une longue période où la demande du réseau est faible, avant de revenir si nécessaire à la puissance nominale PN.

Ces transitoires de puissance, dits transitoires normaux d'exploitation sont donc à différencier des transitoires de puissance plus sévères résultant de situations accidentelles dites de catégorie 2, provoquées par exemple par une augmentation excessive de charge, un retrait incontrôlé de groupe(s) de grappes, une dilution d'acide borique ou encore une chute de grappes non détectée.

La figure 1A montre que l'évolution de puissance P, suite à une chute de grappe, est caractérisée par une baisse de puissance P rapide suivie d'une remontée de puissance P dans un intervalle de temps $D_1$ réduit en comparaison avec le profil de puissance P représentant un transitoire normal d'exploitation illustré à la figure 1B.

Dans la représentation du transitoire normal d'exploitation, la remontée de puissance est amorcée après un intervalle de temps $D_2$ plus important que $D_1$.

Typiquement, pour un réacteur nucléaire à eau pressurisée d'une puissance de 1300MWe, l'intervalle de temps $D_1$ est de l'ordre de quelques secondes et avantageusement de 20 secondes, et l'intervalle de temps $D_2$ est de l'ordre de quelques minutes à quelques heures.

Le procédé selon l'invention permet donc de différencier un transitoire normal d'exploitation, de type suivi de charge ou encore de type îlotage, d'une baisse rapide de puissance d'une chute de grappe. Lors de la détection d'une chute de puissance du type chute de grappe, le procédé selon l'invention déclenche une action corrective et/ou un arrêt d'urgence, lors de la phase de remontée de puissance au moyen d'un seuil par dérivée positive du flux neutronique.

Le procédé selon l'invention permet ainsi de réduire la valeur absolue de la sensibilité de détection de la variation négative du flux neutronique de 6% du flux nominal par seconde à une valeur égale ou inférieure à 5% du flux nominal par seconde sans perturber le fonctionnement normal du réacteur nucléaire même en cas de transitoire d'exploitation sévère du type îlotage.

A cet effet, le procédé de détection selon l'invention comporte les étapes illustrées à la figure 2.

Le procédé de détection selon l'invention comporte une première étape 11 de surveillance de la variation du flux neutroniques $\Phi$ au cours du temps, le flux neutronique $\Phi$ étant mesuré au moyen d'une sonde de mesure du flux neutronique externe au coeur, appelée sonde excore. Lors de cette première étape 11, le procédé selon l'invention surveille la variation du flux neutronique $\Phi$ de façon à détecter une variation négative dudit flux par la détermination de la dérivée temporelle $\frac{\partial \phi}{\partial t}$ dudit flux neutronique ; la variation du flux neutronique représentant une vitesse de progression du flux neutronique exprimée en % du flux nominal par seconde.

Si cette variation négative du flux neutronique est supérieure, en valeur absolue, à une vitesse de progression représentée par un premier seuil $S_1$, alors le procédé déclenche une temporisation $\Delta T$, à l'instant $t_i$, représentée par l'étape 21.

Selon un premier mode avantageux de l'invention, non limitatif, le premier seuil $S_1$ correspond à une variation du flux neutronique sensiblement égale ou inférieure à 5% du flux nominal par seconde, et avantageusement sensiblement égale ou inférieure à 3% du flux nominal pas seconde. Selon ce premier mode avantageux de l'invention, la temporisation $\Delta T$ correspond à un intervalle de temps inférieur à une minute, et avantageusement de l'ordre de 20 secondes (pour un réacteur

de 1300 MWe), déclenchée à partir de l'instant $t_i$ de détection d'une variation négative de flux neutronique supérieure, en valeur absolue, au premier seuil $S_1$.

A partir de l'instant $t_i$ du déclenchement de la temporisation $\Delta$T, et jusqu'à l'instant $t_f$ représentant la fin de temporisation $\Delta$T, le procédé de détection surveille l'évolution du flux neutronique $\Phi$ de façon à détecter une variation positive dudit flux neutronique durant cet intervalle de temps.

Si durant cette temporisation $\Delta$T, l'évolution du flux neutronique correspond à une variation positive supérieure à une vitesse de progression représentée par un deuxième seuil $S_2$, tel qu'illustré par le bloc 31 sur la figure 2, alors le procédé de détection selon l'invention émet un signal de chute de grappe et/ou déclenche un arrêt d'urgence (AU), tel qu'illustré par le bloc 41 de la figure 2.

Selon un premier mode avantageux de l'invention, non limitatif, le deuxième seuil $S_2$ correspond à une variation du flux neutronique sensiblement comprise entre 2% et 4% du flux nominal par seconde, et préférentiellement égale à 3%, du flux nominal par seconde.

Si durant cette temporisation $\Delta$T, l'évolution du flux neutronique correspond à une variation positive comprise entre une vitesse de progression représentée par ledit deuxième seuil $S_2$ et une vitesse de progression représentée par un troisième seuil $S_3$, inférieur au dit deuxième seuil, tel qu'illustré par le bloc 32, alors le procédé détermine, lors de l'étape suivante 33, une variation moyenne du flux neutronique $\left(\frac{\partial \phi}{\partial t}\right)_{moy}$ moyennée sur un intervalle de temps $\Delta$tm au moyen de la relation suivante :

$$\left(\frac{\partial \phi}{\partial t}\right)_{moy} = \frac{1}{\Delta tm}\int_{t_{mi}}^{t_{mf}} \frac{\partial \phi}{\partial t} dt$$

où $t_{mi}$ et $t_{mf}$ sont respectivement les instants de début et de fin dudit intervalle de temps $\Delta$tm.

On notera que l'intervalle de temps $\Delta$tm débute à l'instant $t_{mi}$, correspondant au franchissement du seuil S3, et correspond à une durée typiquement de l'ordre de 10 secondes (pour un réacteur de 1300 MWe).

Si la variation moyenne du flux neutronique $\left(\frac{\partial \phi}{\partial t}\right)_{moy}$ est positive et supérieure à la vitesse de progression représentée par ledit troisième seuil $S_3$, tel qu'illustré par le bloc 34, alors le procédé de détection selon l'invention émet un signal de chute de grappe et/ou déclenche un arrêt d'urgence (AU).

Selon ce premier mode de réalisation avantageux, le troisième seuil $S_3$ correspond à une variation du flux neutronique inférieure à 1% du flux nominal par seconde, typiquement de l'ordre de 0,45% du flux nominal par seconde. La détermination d'une variation moyenne du flux neutronique sur l'intervalle de temps $\Delta$tm permet ainsi de filtrer les fluctuations parasites et d'améliorer la sensibilité de détection d'une chute de grappe.

En revanche, si durant cette temporisation $\Delta$T, l'évolution du flux neutronique correspond à une variation positive inférieure à la vitesse de progression représentée par le troisième seuil $S_3$, alors aucune action n'est entreprise par le procédé, l'évolution de puissance correspondant à un transitoire normal d'exploitation.

Si une variation positive du flux neutronique intervient après la temporisation $\Delta$T déclenchée lors de l'étape 21, c'est-à-dire après $t_f$, le procédé de détection selon l'invention n'engage aucune action. En effet, si la remontée de puissance n'intervient pas dans la temporisation $\Delta$T, on se retrouve alors dans le cas de figure d'un transitoire normal d'exploitation tel qu'illustré par la courbe de la figure 1B.

Ainsi, le procédé selon l'invention permet de distinguer la variation de puissance rapide due à une chute de grappe d'une évolution de puissance due à un transitoire normal d'exploitation tout en augmentant la sensibilité de détection d'une variation négative du flux neutronique par la réduction du premier seuil de détection.

Ainsi, la réduction du premier seuil de détection d'une variation négative du flux neutronique permet d'améliorer la détection des chutes de grappes sans déclencher des actions correctives ou des arrêts d'urgence intempestifs lors de transitoires normaux d'exploitation ou lors des transitoires d'exploitation sévères, comme par exemple les transitoires de type îlotage.

En effet, le procédé selon l'invention déclenche une action corrective et/ou un arrêt d'urgence par l'utilisation de la détection d'une variation positive du flux neutronique et non par variation négative.

Ainsi, selon l'invention, le franchissement d'un seuil par variation positive du flux et le déclenchement de la temporisation participent à l'amélioration de la sensibilité de détection des chutes de grappes et non à l'exécution d'une fonction d'inhibition de l'arrêt d'urgence.

Dans les réacteurs à eau pressurisée comportant un SPIN (Système de Protection Intégré Numérique), la détection d'un plus grand nombre de chutes de grappes permet également de relaxer le seuil de l'alarme bas RFTC (Rapport de Flux Thermique Critique), le seuil RECS ainsi que le seuil de l'alarme de surveillance par puissance linéique vis-à-vis des ruptures par interaction pastille-gaine, et de gagner en marge de fonctionnement.

Dans les réacteurs nucléaires à eau pressurisée ne comportant pas de SPIN, l'amélioration de la détection des chutes de grappes permet de détecter des configurations de chute de grappe pouvant conduire à une crise d'ébullition de l'eau.

Le procédé de détection selon l'invention concerne plus particulièrement le procédé de détection mis

en oeuvre par les moyens de traitement primaire associés à chaque sonde de mesure. En outre, les moyens de traitement primaires peuvent être complétés par des moyens de traitement secondaire recevant les signaux de sortie de chacun des moyens de traitement primaire, correspondant à chacune des sondes de mesure permettant de valider l'action corrective et/ou l'arrêt d'urgence seulement lorsque les moyens de traitement secondaire reçoivent au moins deux signaux d'action corrective ou d'arrêt d'urgence. Ainsi les moyens de traitement secondaire permettent de réduire le risque d'un engagement d'une action corrective, de type arrêt du réacteur en absence réelle d'une chute de grappe dans le réacteur.

## Revendications

**1.** Procédé de détection de chute de grappe d'un réacteur nucléaire à eau pressurisée, ledit procédé comportant les étapes consistant à :

- détecter une dérivée temporelle négative du flux neutronique, et comparer la valeur absolue de ladite dérivée temporelle à une première valeur seuil ($S_1$) ;
- déclencher une temporisation ($\Delta T$) si ladite valeur absolue est supérieure à ladite valeur seuil ($S_1$) ;
- détecter une dérivée temporelle positive dudit flux neutronique, et comparer la valeur absolue de ladite dérivée temporelle à une deuxième valeur seuil ($S_2$) ;
- déclencher l'arrêt d'urgence du réacteur si la valeur absolue de ladite dérivée temporelle positive dudit flux devient supérieure à ladite deuxième valeur seuil ($S_2$) durant ladite temporisation ($\Delta T$).

**2.** Procédé de détection de chute de grappe d'un réacteur nucléaire à eau pressurisée selon la revendication précédente **caractérisé en ce qu'**il comporte une étape de détermination d'une dérivée moyenne du flux neutronique sur un intervalle de temps ($\Delta tm$) si ladite valeur absolue de ladite dérivée temporelle positive dudit flux neutronique reste comprise entre ladite deuxième valeur seuil ($S_2$) et une troisième valeur seuil ($S_3$) lors de ladite temporisation ($\Delta T$).

**3.** Procédé de détection de chute de grappe d'un réacteur nucléaire à eau pressurisée selon la revendication 2 **caractérisé en ce que** ledit arrêt d'urgence est déclenché si ladite valeur absolue moyenne de ladite dérivée temporelle moyenne dudit flux est supérieure à ladite troisième valeur seuil ($S_3$) durant ladite temporisation ($\Delta T$).

**4.** Procédé de détection de chute de grappe d'un réacteur nucléaire à eau pressurisée selon l'une des revendications 1 à 3 **caractérisé en ce que** ladite première valeur seuil ($S_1$) correspond à une variation égale ou inférieure à 5% du flux nominal par seconde.

**5.** Procédé de détection de chute de grappe d'un réacteur nucléaire à eau pressurisée selon l'une des revendications 1 à 4 **caractérisé en ce que** ladite deuxième valeur seuil ($S_2$) correspond à une variation comprise entre 2% et 4% du flux nominal par seconde.

**6.** Procédé de détection de chute de grappe d'un réacteur nucléaire à eau pressurisée selon l'une des revendications 2 à 5 **caractérisé en ce que** ladite troisième valeur seuil ($S_3$) correspond à une variation inférieure à 1% du flux nominal par seconde.

**7.** Procédé de détection de chute de grappe d'un réacteur nucléaire à eau pressurisée selon l'une des revendications 1 à 6 **caractérisé en ce que** ladite temporisation ($\Delta T$) correspond à une durée inférieure à une minute.

**8.** Procédé de détection de chute de grappe d'un réacteur nucléaire à eau pressurisée selon l'une des revendications 2 à 7 **caractérisé en ce que** ledit intervalle de temps ($\Delta tm$) de détermination de ladite dérivée moyenne correspond à une durée inférieure à ladite durée de ladite temporisation ($\Delta T$).

**9.** Procédé de détection de chute de grappe d'un réacteur nucléaire à eau pressurisée selon l'une des revendications 2 à 8 **caractérisé en ce que** ledit intervalle de temps ($\Delta tm$) est égal à 10 secondes.

**10.** Dispositif de détection de chute de grappe, pour la mise en oeuvre du procédé selon l'une des revendications 1 à 9 **caractérisé en ce qu'**il comporte

- une sonde de mesure du flux neutronique apte à la mesure d'un flux neutronique ;
- des moyens de traitement primaire associés à ladite sonde comportant :

  - des moyens pour détecter une dérivée temporelle négative du flux neutronique, et comparer la valeur absolue de ladite dérivée temporelle à une première valeur seuil ($S_1$) ;
  - des moyens pour déclencher une temporisation ($\Delta T$) si ladite valeur absolue est supérieure à ladite valeur seuil ($S_1$) ;
  - des moyens pour détecter une dérivée temporelle positive dudit flux neutronique, et comparer la valeur absolue de ladite dérivée temporelle à une deuxième valeur

seuil ($S_2$) ;
- des moyens pour déclencher l'arrêt d'urgence du réacteur si la valeur absolue de ladite dérivée temporelle positive dudit flux devient supérieure à ladite deuxième valeur seuil ($S_2$) durant ladite temporisation ($\Delta T$).

**Patentansprüche**

1. Verfahren zur Erfassung des Brennstabbündelabfalls eines Druckwasserkernreaktors, wobei das genannte Verfahren aus folgenden Schritten besteht:

   - Erfassung einer negativen Zeitableitung des Neutronenflusses und Vergleichung des absoluten Wertes der genannten Zeitableitung mit einem ersten Schwellenwert ($S_1$).
   - Auslösung einer Zeitverzögerung ($\Delta T$), wenn der genannte absolute Wert über dem genannten Schwellenwert liegt ($S_1$).
   - Erfassung einer positiven Zeitableitung des genannten Neutronenflusses und Vergleichung des absoluten Wertes der genannten Zeitableitung mit einem zweiten Schwellenwert ($S_2$).
   - Auslösung der Notausschaltung des Reaktors, wenn der absolute Wert der genannten positiven Zeitableitung des genannten Flusses über dem genannten zweiten Schwellenwert ($S_2$) während der genannten Zeitverzögerung ($\Delta T$) liegt.

2. Verfahren zur Erfassung des Brennstabbündelabfalls eines Druckwasserkernreaktors gemäß dem voranstehenden Anspruch, **dadurch gekennzeichnet, dass** das genannte Verfahren einen Erfassungsschritt für die durchschnittliche Ableitung des Neutronenflusses über einen Zeitintervall ($\Delta tm$) enthält, wenn der genannte absolute Wert der genannten positiven Zeitableitung des genannten Neutronenflusses zwischen dem genannten zweiten Schwellenwert ($S_2$) und dem dritten Schwellenwert ($S_3$) während der genannten Zeitverzögerung ($\Delta T$) liegt.

3. Verfahren zur Erfassung des Brennstabbündelabfalls eines Druckwasserkernreaktors gemäß des Anspruchs 2, **dadurch gekennzeichnet, dass** die genannte Notausschaltung ausgelöst wird, wenn der genannte durchschnittliche absolute Wert der genannten durchschnittlichen Zeitverzögerung des genannten Flusses über dem genannten dritten Schwellenwert ($S_3$) während der genannten Zeitverzögerung ($\Delta T$) liegt.

4. Verfahren zur Erfassung des Brennstabbündelabfalls eines Druckwasserkernreaktors gemäß der Ansprüche 1 bis 3, **dadurch gekennzeichnet, dass** der genannte erste Schwellenwert ($S_1$) einer Abweichung gleich oder weniger als 5% des Nenndurchsatzes pro Sekunde entspricht.

5. Verfahren zur Erfassung des Brennstabbündelabfalls eines Druckwasserkernreaktors gemäß der Ansprüche 1 bis 4, **dadurch gekennzeichnet, dass** der genannte zweite Schwellenwert ($S_2$) einer Abweichung zwischen 2 % und 4 % des Nenndurchsatzes pro Sekunde entspricht.

6. Verfahren zur Erfassung des Brennstabbündelabfalls eines Druckwasserkernreaktors gemäß der Ansprüche 2 bis 5, **dadurch gekennzeichnet, dass** der genannte dritte Schwellenwert ($S_3$) einer Abweichung unter 1 % des Nenndurchsatzes pro Sekunde liegt.

7. Verfahren zur Erfassung des Brennstabbündelabfalls eines Druckwasserkernreaktors gemäß der Ansprüche 1 bis 6, **dadurch gekennzeichnet, dass** die genannte Zeitverzögerung ($\Delta T$) einer Dauer von unter einer Minute entspricht.

8. Verfahren zur Erfassung des Brennstabbündelabfalls eines Druckwasserkernreaktors gemäß der Ansprüche 2 bis 7, **dadurch gekennzeichnet, dass** das genannte Zeitintervall ($\Delta tm$) der Erfassung der genannten durchschnittlichen Ableitung einer kürzeren Dauer im Vergleich zu der Dauer der genannten Zeitverzögerung ($\Delta T$) entspricht.

9. Verfahren zur Erfassung des Brennstabbündelabfalls eines Druckwasserkernreaktors gemäß der Ansprüche 2 bis 8, **dadurch gekennzeichnet, dass** das genannte Zeitintervall ($\Delta tm$) 10 Sekunden entspricht.

10. Verfahren zur Erfassung des Brennstabbündelabfalls für die Umsetzung des Verfahrens gemäß einer der Ansprüche 1 bis 9, **dadurch gekennzeichnet, dass** dieses Folgendes enthält:

    - einen Messfühler des Neutronenflusses, der für die Messung des Neutronenflusses geeignet ist;
    - primäre Behandlungsmittel, die dem genannten Messfühler zugeordnet sind;

        - Mittel für die Erfassung einer negativen Zeitableitung des Neutronenflusses und den Vergleich des absoluten Wertes der genannten Zeitableitung mit einem ersten Schwellenwert ($S_1$);
        - Mittel für die Auslösung einer Zeitverzögerung ($\Delta T$), wenn der genannte absolute Wert über dem genannten Schwellenwert liegt ($S_1$);

- Mittel für die Erfassung einer positiven Zeitableitung des Neutronenflusses und den Vergleich des absoluten Wertes der genannten Zeitableitung mit einem zweiten Schwellenwert ($S_2$);
- Mittel für die Auslösung der Notausschaltung des Reaktors, wenn der absolute Wert der genannten positiven Zeitableitung des genannten Flusses über dem genannten zweiten Schwellenwert ($S_2$) der genannten Zeitverzögerung ($\Delta$T) liegt.

## Claims

**1.** Method for detecting rod drops in a pressurized-water nuclear reactor, said method comprising the steps of:

- detecting a negative time derivative of the neutron flux, and comparing the absolute value of said time derivative with a first threshold value ($S_1$);
- triggering a time delay ($\Delta$T) if said absolute value is greater than said threshold value ($S_1$);
- detecting a positive time derivative of said neutron flux, and comparing the absolute value of said time derivative with a second threshold value ($S_2$);
- triggering the emergency shutdown of the reactor if the absolute value of said positive time derivative of said flux becomes greater than said second threshold value ($S_2$) during said time delay ($\Delta$T).

**2.** Method for detecting rod drops in a pressurized-water nuclear reactor according to the preceding claim **characterized in that** it comprises a step of determining an average derivative of the neutron flux over a time interval ($\Delta$tm) if said absolute value of said positive time derivative of said neutron flux remains between said second threshold value ($S_2$) and a third threshold value ($S_3$) during said time delay ($\Delta$T).

**3.** Method for detecting rod drops in a pressurized-water nuclear reactor according to claim 2 **characterized in that** said emergency shutdown is triggered if said average absolute value of said average time derivative of said flux is greater than said third threshold value ($S_3$) during said time delay ($\Delta$T).

**4.** Method for detecting rod drops in a pressurized-water nuclear reactor according to one of claims 1 to 3 **characterized in that** said first threshold value ($S_1$) corresponds to a variation equal to or less than 5% of the nominal flux per second.

**5.** Method for detecting rod drops in a pressurized-water nuclear reactor according to one of claims 1 to 4 **characterized in that** said second threshold value ($S_2$) corresponds to a variation between 2% and 4% of the nominal flux per second.

**6.** Method for detecting rod drops in a pressurized-water nuclear reactor according to one of claims 2 to 5 **characterized in that** said third threshold value ($S_3$) corresponds to a variation less than 1% of the nominal flux per second.

**7.** Method for detecting rod drops in a pressurized-water nuclear reactor according to one of claims 1 to 6 **characterized in that** said time delay ($\Delta$T) corresponds to a duration less than one minute.

**8.** Method for detecting rod drops in a pressurized-water nuclear reactor according to one of claims 2 to 7 **characterized in that** said time interval ($\Delta$tm) for determination of said average derivative corresponds to a duration less than said duration of said time delay ($\Delta$T).

**9.** Method for detecting rod drops in a pressurized-water nuclear reactor according to one of claims 2 to 8 **characterized in that** said time interval ($\Delta$tm) is equal to 10 seconds.

**10.** Device for detecting rod drops , for implementing the method according to one of claims 1 to 9 **characterized in that** it comprises:

- a probe for measuring the neutron flux adapted to the measurement of a neutron flux;
- primary processing means associated with said probe comprising:

  - means for detecting a negative time derivative of the neutron flux, and comparing the absolute value of said time derivative with a first threshold value ($S_1$);
  - means for triggering a time delay ($\Delta$T) if said absolute value is greater than said threshold value ($S_1$);
  - means for detecting a positive time derivative of said neutron flux, and comparing the absolute value of said time derivative with a second threshold value ($S_2$);
  - means for triggering the emergency shutdown of the reactor if the absolute value of said positive time derivative of said flux becomes greater than said second threshold value ($S_2$) during said time delay ($\Delta$T).

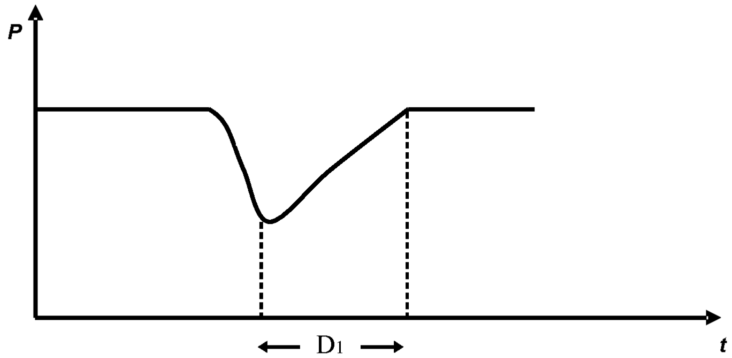


FIG. 1A

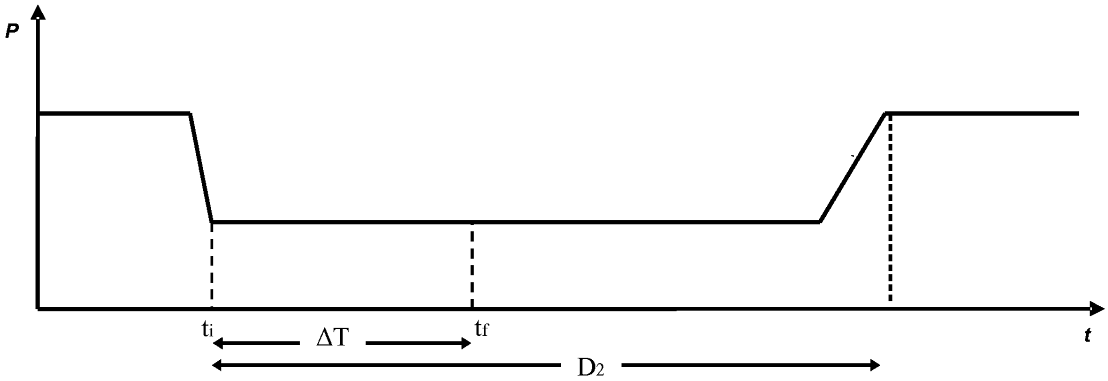


FIG. 1B

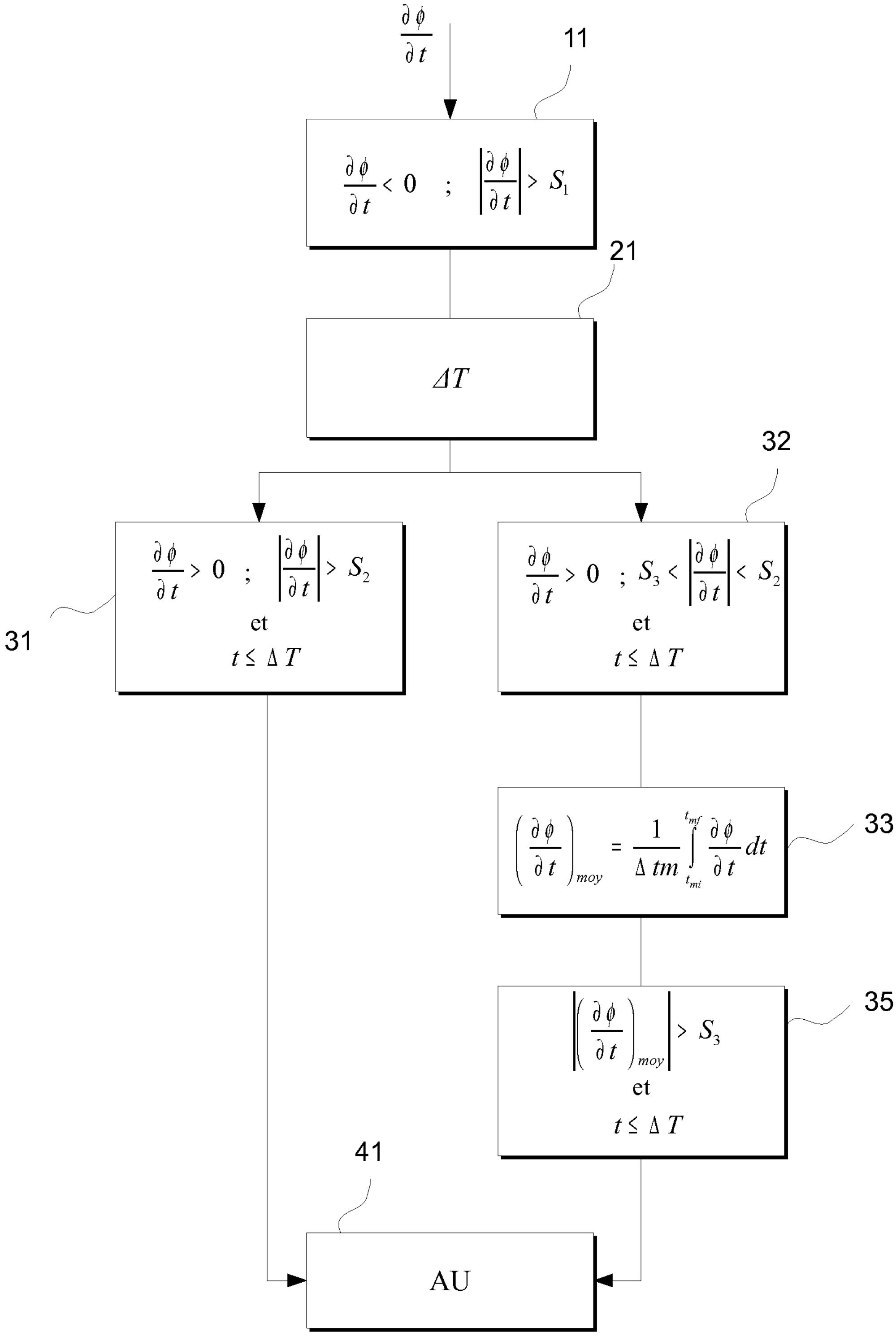


FIG. 2

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- US 4842805 A
- US 6118837 A
- US 20090252272 A